# EUROPEAN PATENT APPLICATION

(11) **EP 2 207 383 A1**
(43) Date of publication of application: **14.07.2010**
(21) Application number: 09290022.4
(22) Date of filing: 09.01.2009
(51) Int. Cl.: H04W 36/32

(54) **Method and apparatus for use in performing a handover function in a cellular wireless network**

(71) Applicant: Alcatel Lucent, 75008 Paris (FR)
(72) Inventor: Faucheux, Frederic, 75015 Paris (FR); Randriamasy, Sabine, 92190 Meudon (FR); Capdevielle, Veronique, 78114 Magny les Hameaux (FR)
(74) Representative: Cockayne, Gillian

(57) **Abstract**

A method for use in handover of a mobile terminal, MS, from a serving base station included in a cellular wireless network, comprises obtaining navigation information about the MS, the navigation information including at least one of: speed of the MS; and a predicted future location of the MS. The navigation information is used in performing a handover function, for example, in prioritizing a scanning order of candidate base stations suitable for possible haridover, or in adjusting a handover threshold level, or in some other function. The navigation information may be obtained from a navigator device that is integrated with the MS, for example, or separate therefrom.

## Description

### FIELD OF THE INVENTION

The present invention relates to a method and apparatus for use in performing a handover function for a mobile terminal, MS, from a serving base station included in a cellular wireless network.

### BACKGROUND

In a wireless cellular network comprising a plurality of access nodes via which a user device may access the network, it may be desirable to offer support for mobility of the user device, for example, to manage the user device moving from a one cell of the network to another cell, or where changing radio conditions, for example, make it necessary for the user device to handover to a new serving node to maintain connectivity.

Types of network currently under development are intended to permit broadband wireless access, such as networks in accordance with IEEE 802.16 standards, also sometimes referred to as WiMAX. In WiMAX, access nodes are usually referred to as base stations and the user device as a mobile subscriber station. In WiMAX, a mobile subscriber station in communication with a serving base station, and wishing to initiate handover (HO) to another target base station, scans the frequencies of neighbouring base stations until it finds a downlink signal. During scanning by the mobile subscriber station, payload data communication is interrupted to enable different frequencies to be scanned. Such interruption may be critical and lead to call drops, especially for delay sensitive applications such as VoIP, Video streaming or gaming.

In conditions where the signal received from the currently attached serving base station might be rapidly degrading, it is important to find a suitable target BS (TBS) quickly. Scanning times may be reduced by ordering candidate target base stations so that those where handover is more likely to be successfully achieved are scanned first. This might be achieved by using the history of successful HOs, with base stations ranked with respect to HO success rate.

A paper by Boone ct al., "Strategies for Fast Scanning and Handovers in WiMax/802.16", BWIA-First International Workshop on Broadband Wireless Access (IEEE ACCESSNETS 2007), August 22-24, 2007, Ottawa, Ontario, Canada, proposes strategies for reducing the time required for scanning operations while performing handover between neighbouring base stations in a WiMAX network. One suggested strategy is for the mobile subscriber station to build a history of handovers between base stations it has visited and for the mobile subscriber station to use this to determine which base station is the most likely neighbour target base station for a handover. The most likely candidate is scanned for first. Such types of approach require periodicity of the mobility pattern of the mobile user to determine probability of successful handover and use learning processes to build up the information.

### BRIEF SUMMARY

According to a first aspect of the invention, a method for use in performing a handover function for a mobile terminal, MS, from a serving base station included in a cellular wireless network, comprises obtaining navigation information about the MS, the navigation information including at least one of speed of the MS; and a predicted future location of the MS. The navigation information is used in performing a handover function. The handover function may, for example, be concerned with selection of a candidate base station to be scanned, or providing a scanning order for a list of candidate base stations, or with adjusting parameters used in handover such as a handover threshold level, or some other function.

A method in accordance with the invention may be applied even where there is no periodicity of the pattern of movcmcnt by an MS. Furthermore, a method in accordance with the invention may be advantageously applied even where an MS undergoes unanticipated movements and may be advantageously applied to take into account the speed of an MS in performing handover functions.

In a method in accordance with the invention, navigation information is received from a navigation unit. The navigation unit may be included in the MS or separate therefrom but capable of communicating with the MS, for example.

Navigator units are available which use traffic road information received through broadcast radio channel: RDS-TMC (Radio Data System-Traffic Message Channel), or via GPRS, for example. Some systems (such as Tomtom HD traffic) use information coming from the GSM network operator in order to detect the traffic jams, hence greatly improving the quality of navigation prediction. These systems optimize the navigation process using the GSM information. A method in accordance with invention uses localization and navigation information to enhance the HO process.

In one method, the navigation information is used to configure a list of candidate base stations to be scanned using a predicted future location of the MS. The predicted future location of the MS may be determined using at least one of: current location; and a predicted trajectory computation, for example. In a method in accordance with the invention, the navigation information is used in conjunction with probability statistics in selecting a candidate base station.

In a method in accordance with the invention the navigation information may be used to adjust speed-sensitive scanning parameters, such as, for example, the handover threshold, or the scanning threshold.

In one method in accordance with the invention, the navigation information is used to adjust the rate at which candidate base stations are scanned.

According to a second aspect of the invention, a mobile terminal comprises a navigator unit; and a transmitter for transmitting navigation information from the unit to a serving base station for use in handover functions.

According to a third aspect of the invention, a base station for a cellular wireless network is operative in accordance with a method in accordance with the first aspect of the invention.

### BRIEF DESCRIPTION OF THE DRAWINGS

Some embodiments of the present invention will now be described by way of example only, and with reference to the accompanying drawings, in which:

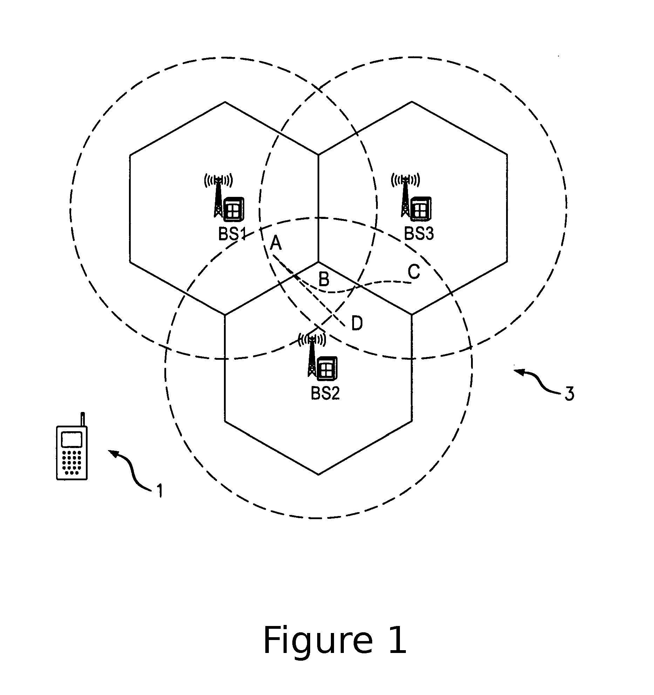

Figure 1 schematically illustrates a method and apparatus in accordance with the invention.

### DETAILED DESCRIPTION OF THE DRAWINGS

With reference to Figure 1, an MS 1 is in communication with a serving base station BS 1, included in a WiMAX network 3. The MS 1 incorporates a navigator unit 4, which uses a satellite and/or ground based beacons to determine current location and to calculate a predicted trajectory for the MS 1. In other embodiments, the navigator unit is separate from the MS 1 but capable of communication therewith, for example, via a Bluetooth interface or some other mechanism.

The navigator unit 4 provides information including current localization (position, speed and direction) of the MS, and its projected localization in the future, based on the trajectory computed by the navigator.

The information received form the navigator unit is used to adjust speed-sensitive scanning parameters such as signal to noise ratio threshold, WiMAX interleaving period and so on. The Ms 1 may thus adapt scanning parameters to its speed, especially the Threshold on SNR at which it should start to scan potential target BSs.

Also, the navigation information may be used in the selection of BS to scan based on localization and navigation information: the predicted position from current, instantaneous localization information or, if available, from trajectory computation by the navigator.

The navigation information may also be used to adapt HO threshold. The optimal value for HO threshold depends on the speed of the mobile terminal, and use of the navigation information enhances this aspect.

When the MS 1 forwards its localization and navigation information to the current serving BS 1, the use of centralized statistics, stored at the base station or at some other network component, such as gateway, may improve the prediction of which is the most suitable candidate BS. Moreover the SBS may also use these statistics together with any available information on the potential candidate neighbor BSs, such as its capacity, current load to aid the decision making process.

Figure 1 also shows two additional base stations in the network, BS 2 and BS 3. The MS 1 receives navigation information from the unit 4 such as instantaneous speed, average speed, but also a prediction of speed in the next few seconds. At high speed, the MS has a high risk of leaving the current BS coverage zone sooner than with a lower speed. Moreover, the higher the user speed, the more degraded is its experienced radio performance (ex- Packet Error Rate (PER)) for a given Signal to Noise Ratio (SNR). For high speed users, scanning should then be triggered at high enough SNR values. Therefore the scanning threshold and other scanning parameters (eg: interleaving periods) are adapted to the speed of the MS. The detection of a higher MS speed triggers automatic tuning of the following scanning parameters: the scanning threshold is set to a higher value, in order to begin to scan other BSs as soon as necessary; and the interleaving period: is lowered so that the neighbor BSs are scanned more frequently. Moreover, the HO threshold itself is set to a higher value for high speed mobile users, so that the HO can begin sooner, avoiding that the MS loses its current connection before creating a link to the target BS.

NBS navigation and location-based TBS selection uses information on the BS location and on the trajectory predicted by the navigator unit 4 to configure the list of candidate BS to scan: the NBS are ordered by decreasing probability P_{HO_NAV}(NBS, position(NBS), position(MS))) of being chosen as target BS for HO and are scanned in that order, thus speeding up the scanning process. The navigation enriched HO probability P_{_HO_NAV} involves in addition to signal quality, the following information:
- the anticipated position of the MS, within delay Dt, given its current and predicted speed,
- the geographical position of the NBS,
- the minimal distance between MS and NBS within delay Dt,
   That information allows a determination of the most probable TBS wrt navigation, signal and so on.

Turning to the figure, at position A, the MS decides to begin scanning other BS. Based solely on the MS location, current speed and direction at time t , the future position of MS within delay Dt is computed (next position is point D in the figure). The predicted best candidate BS at time t+Dt is BS2, so BS2 will be scanned first.

If the MS trajectory is available from the navigation element NVE, it is predicted in that example that the MS will be at position C in time t+Dt. This means that BS3 must be scanned with higher priority than BS2. Combining information on MS speed and navigator unit 4 trajectory augments the robustness of the scanning decision in the following way:
if the MS indeed follows the navigator unit 4 predicted path at high speed, only the candidate BS with higher probability w.r.t. signal, speed, and
navigator unit 4 parameters are scanned before HO , and the MS connects directly to BS3, without having to perform an intermediate HO to BS2 in a short period of time.
if the actual speed is lower than predicted (due to traffic for example), and the MS is only at point B, the MS has both more time to scan before HO and more time to spend in the BS2 coverage zone. Therefore, both BS3 and BS2 are scanned, and as BS2 is received better than BS3 at point B, BS2 is elected as target BS.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

**1.** A method for use in performing a handover function for a mobile terminal, MS, from a serving base station included in a cellular wireless network, comprises:
obtaining navigation information about the MS, the navigation information including at least one of: speed of the MS; and a predicted future location of the MS; and
using the navigation information in performing a handover function.

**2.** The method as claimed in claim 1 and wherein the navigation information is used in selecting a candidate base station to be scanned.

**3.** The method as claimed in claim 2 and wherein the navigation information is used to configure a list of candidate base stations to be scanned using a predicted future location of the MS.

**4.** The method as claimed in claim 3 and wherein the predicted future location of the MS is determined using at least one of current location; and a predicted trajectory computation.

**5.** The method as claimed in claim 2, 3 or 4 and including the navigation information being used in conjunction with probability statistics in selecting a candidate base station.

**6.** The method as claimed in any preceding claim and including receiving the navigation information from a navigation unit.

**7.** The method as claimed in claim 6 and wherein the navigation unit is included in the MS.

**8.** The method as claimed in any preceding claim and including using the navigation information to adjust speed-sensitive scanning parameters.

**9.** The method as claimed in claim 8 and wherein the navigation information is used to set the handover threshold.

**10.** The method as claimed in claim 8 or 9 and wherein the navigation information is used to adjust the scanning threshold.

**11.** The method as claimed in any preceding claim and wherein the navigation information is used to adjust the rate at which candidate base stations are scanned.

**10.** The method as claimed in any preceding claim and wherein the MS forwards navigation information to its serving base station.

**11.** A mobile terminal comprising a navigator unit; and a transmitter for transmitting navigation information from the unit to a serving base station for use in handover functions.

**12.** The mobile terminal as claimed in claim 11 and operative in accordance with a method as claimed in any of claims 1 to 10.

**13.** A base station for a cellular wireless network and operative in accordance with a method as claimed in any of claims 1 to 10.
